Europäisches Patentamt

(19) European Patent Office

Office européen des brevets

(11) Veröffentlichungsnummer: **0 072 877**
**B1**

(12) **EUROPÄISCHE PATENTSCHRIFT**

(51) Int. Cl.⁴: **B 62 D 5/06**, B 60 B 35/10

(45) Veröffentlichungstag der Patentschrift:
**27.03.85**

(21) Anmeldenummer: **81106656.2**

(22) Anmeldetag: **27.08.81**

(54) **Hydraulik-Lenkzylinder.**

(43) Veröffentlichungstag der Anmeldung:
**02.03.83 Patentblatt 83/9**

(45) Bekanntmachung des Hinweises auf die Patenterteilung:
**27.03.85 Patentblatt 85/13**

(84) Benannte Vertragsstaaten:
**AT DE FR GB IT SE**

(56) Entgegenhaltungen:
**AT - B - 348 351**
**DE - C - 417 294**
**DE - U - 7 511 255**

(73) Patentinhaber: **DEERE & COMPANY, 1 John Deere Road, Moline Illinois 61265 (US)**

(72) Erfinder: **Schneider, Werner, Berliner Strasse 6, D-6705 Deidesheim (DE)**

(74) Vertreter: **Feldmann, Bernhard et al, DEERE & COMPANY European Office, Patent Department Steubenstrasse 36-42 Postfach 503, D-6800 Mannheim 1 (DE)**

## Beschreibung

Die Erfindung betrifft einen Hydraulik-Lenkzylinder, der im Bereich einer spurverstellbaren Vorderachse einer Landmaschine, insbesondere eines Ackerschleppers, mittels Kugelgelenk gelagert und etwa zwischen Halbachse und der ebenfalls spurverstellbaren Spurstange und etwa parallel zu diesen verlaufend auf den zum Achsende gehörigen Lenkhebel wirkt und mindestens einen etwa radial angeordneten Hydrauliköl-Ein- bzw. Auslaßstutzen aufweist.

Die Verwendung von Lenkzylindern in der vorbeschriebenen Anordnung ist z. B. durch die DE-U-7 511 255 oder die AT-B-348 351 bekannt. Es handelt sich um Hydraulikzylinder herkömmlicher Bauart, d. h. mit meist rundem Hauptzylinderkörper, an dem radial Hydrauliköl-Einlaß- bzw. Auslaßstutzen angebracht sind. Im allgemeinen handelt es sich um insgesamt zwei Stutzen, wobei der eine am unteren, der andere am oberen Ende des Zylinderkörpers liegt. Es kommen jedoch auch solche Hydraulikzylinder in Frage, die nur einen einzigen Außenstutzen aufweisen, und zwar im Falle eines Lenksystems mit jeweils an der linken und rechten Halbachse angeordneten Lenkzylindern, die miteinander gekoppelt und jeweils nur in der einen oder anderen Richtung druckbeaufschlagbar sind. Dabei weisen die herkömmlichen für die Lenkung verwendeten Hydraulikzylinder am Ende ihres Zylinderkörpers, gelegentlich auch am Ende des Zylinderkolbens, einen Lagerteil mit Kugelgelenk zur homokinetischen Lagerung des Hydraulikzylinders auf.

Dies ist für den vorgesehenen Einbau als Lenkzylinder von Bedeutung, da dieser etwa parallel zur Halbachse, aber doch in gewisser Abweichung von dieser gewisse Horizontal- und Vertikal-Bewegungen je nach Konstruktion und Einschlag der gelenkten Räder durchführen muß.

Im allgemeinen wird der Lenkzylinder so eingebaut, daß der Zylinderkörper Richtung Achsmitte liegt und der Kolben auf der Seite des Lenkhebels. Grundsätzlich ist auch eine umgekehrte Lagerung denkbar. Dabei ergibt sich nun das Problem, daß der Hydraulik-Lenkzylinder infolge seiner homokinetischen Lagerung einen Freiheitsgrad in bezug auf Rotationsbewegungen um seine eigene Achse besitzt. Das bedeutet, daß insbesondere die Stutzen und die sich daran anschließenden Hydraulikleitungen sich in keiner fixierten Lage befinden. Infolge der benachbarten Lage zur Halbachse bzw. zur Spurstange besteht nun die Gefahr, daß die Lenkzylinderstutzen oder zumindest die sich daran anschließenden Hydraulikleitungen durch Verdrehen so in den Bereich der benachbarten und relativ zum Lenkzylinder bewegten Teile geraten, daß hier Beschädigungen eintreten können. Dies gilt insbesondere auf der Seite der spurverstellbar ausgebildeten und mit entsprechenden radial an ihrem Umfang hervortretenden Manschetten, Schraubbolzen ect. ausgerüsteten Spurstange. Durch die großen Relativbewegungen solcher Teile können die Hydraulikleitungen im Berührungsfall zerstört werden.

Der Erfindung liegt somit die Aufgabe zugrunde, eine zusätzliche Halterung für den Hydraulikzylinder zur Verfügung zu stellen, um ein Verdrehen des Zylinderkörpers einschließlich der Stutzen und Hydraulikleitungen aus der vorgegebenen Lage heraus zu verhindern.

Die vorgenannte Aufgabe wird bei der Halterung der eingangs genannten Art gemäß der Erfindung gelöst durch einen Federarm als zusätzliche Halterung in wahlweiser Verbindung mit einem Steckelement zum lösbaren Einstecken in eine freigebliebene Bohrung der ansonsten für die Verschraubung der spurverstellbaren Halbachse (n) vorgesehenen Lochreihe oder mit einem Verschraubungselement, wobei der Federarm zum lösbaren Aufstecken auf den bolzenförmigen der Einsteckseite abgewandten Kopf des Steckelementes oder auf den der Halbachsenverschraubung dienenden Kopf eines Schraubenbolzens bzw. einer Gegenmutter oder dergleichen eine dem genannten Kopf bezüglich Form und lichtem Durchmesser angepaßte Öse oder dergleichen aufweist, an die sich der eigentliche, im wesentlichen drahtwendelförmige, den Lenkzylinder am Hydrauliköl-Ein- bzw. Auslaßstutzen umgreifende Federarm anschließt.

Durch die DE-C-417 294 ist es bekannt, eine Schraubenmutter mit einem federarmähnlichen Sicherungsbügel gegen Lösen bzw. Verdrehen zu sichern. Im Falle der Erfindung hat die wahlweise verwendete Mutter allerdings eine Haltefunktion für den Federarm, der ein andersartiges bewegliches Teil, nämlich den Lenkzylinder, gegen Verdrehen sichern soll, wozu der Federarm spezifisch angepaßt, geformt und eingesetzt werden muß. Aufgabe, Funktion und letztlich auch Ausbildung der Federarme sind insoweit nicht vergleichbar.

Die Anwendung der erfindungsgemäßen Halterung ist von besonderem Wert für die Kombination mit spurverstellbaren Vorderachsen, die demgemäß eine entsprechend spurverstellbare Spurstange aufweisen. Eine häufig benutzte spurverstellbare Vorderachse weist am Achsansatz des Achsmittelstücks und am Verbindungsansatz der Halbachse eine Lochreihe oder auch eine Doppel-Lochreihe zum Verschrauben von Achsmittelstück und Halbachse mittels Schraubbolzen oder dergleichen auf. Hierauf kann die achsseitige Halterung der Federarms abgestimmt werden, wobei der Federarm gemäß der Erfindung mit und ohne Steckelement verwendet werden kann. Grundsätzlich ist auch eine andere Form der Verankerung des Federarms auf der Seite der Achse möglich. Weitere vorteilhafte Ausführungsformen der Erfindung sind in den Unteransprüchen gekennzeichnet.

Die erfindungsgemäße Halterung ist auf denkbar einfache Weise anzuwenden, wobei sich ihre Anwendung in der Regel auf der Innenseite empfiehlt, d. h. die Halterung wird in Nähe des achsmittelstückseitigen Endes der Halbachse angebracht und umgreift den achsmittelstückseitigen Stutzen des Lenkzylinders, sofern mehr als ein Stutzen am Lenkzylinder vorhanden ist. Bei Verstellung der Halbachse kann der Federarm ggf. einschließlich Steckelement samt Halbachse und Lenkzylinder um z. B. eine oder zwei Bohrungen versetzt und wieder angebracht werden.

Die Halterung ist auch kostengünstig herstellbar und verhindert zuverlässig das Verdrehen des Lenkzylinderkörpers in radialer Richtung. Sie ist vielmehr bei entsprechender geometrischer Ausbildung geeignet, den Lenkzylinderkörper und die daran angebrachten Hydraulikleitungen in einer bestimmten die Kollision insbesondere mit der Spurstange verhindernden Lage zuverlässig zu fixieren.

Im folgenden wird die Erfindung anhand eines Ausführungsbeispiels erläutert, aus dem sich weitere Vorteile und Merkmale der Erfindung entnehmen lassen. In der zugehörigen Zeichnung zeigt

Fig. 1 eine perspektivische Ansicht der rechten Vorderachse mit Lenkzylinder und Spurstange, teils im Bereich der Halterung quer zur Achsrichtung geschnitten;

Fig. 2 die Draufsicht auf die Halterung, etwa längs der Achse gesehen;

Fig. 3 die Draufsicht auf die Halterung, etwa quer zur Achse gesehen;

Fig. 4 die Draufsicht einer anders ausgebildeten Halterung, ebenfalls quer zur Achse gesehen.

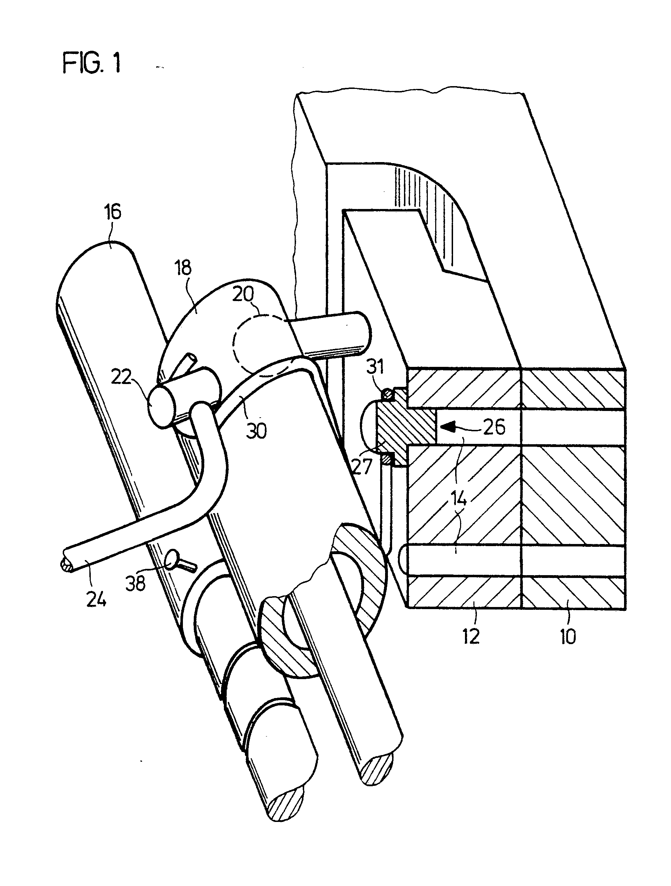

Fig. 1 zeigt eine im wesentlichen perspektivische Ansicht der Gesamtanordnung. Achsansatz 10 des Achsmittelstücks und Halbachse 12 sind quer zur Achsrichtung geschnitten, um das ggf. zu verwendende Steckelement 26 in seiner Anordnung und Funktion zu verdeutlichen. Es sitzt hier in einer oberen Bohrung 14 der oberen Lochreihe. Achsansatz 10 und Halbachse 12 haben Vierkant- bzw. Kastenform, die Halbachse 12 ist von Bohrloch zu Bohrloch z. B. vierfach spurverstellbar. Dabei wird ein Teil der Bohrungen 14 benutzt zur Aufnahme durchgehender Schraubbolzen. Es versteht sich, daß die Halterung z. B. auch auf eine runde Teleskopachse mit nur einer Lochreihe anwendbar ist.

Der Lenkzylinder 18 ist an der Halbachse mittels einem strichliert angedeuteten, an sich verdeckten Kugelgelenk 20 angebracht. Er ist zusammen mit der Halbachse verstellbar. Der Lenkzylinder 18 ist nach vorne unvollständig dargestellt, ebenso wie die spurverstellbare Spurstange 16. Ihre sonstige Anordnung in Verbindung mit dem Lenkhebel etc. ist bekannt und bedarf keiner weiteren Erläuterung. Im dargestellten Falle ist der Lenkzylinder 18 am Ende des Zylinderteils über das Kugelgelenk 20 fest mit der Halbachse 12 verbunden, wobei die Konstruktion die bei Betätigung des Lenkzylinders 18 zur Lenkung auftretenden Druck- und Scherkräfte aufzunehmen hat. Weiterhin ist der Lenkzylinder 18 auf der Seite seines Hydraulikkolbens am Lenkhebel befestigt. Trotz dieser zweifachen Lagerung am Beginn und am Ende des Hydraulik-Lenkzylinders 18 bleibt im Falle der homokinetischen Befestigung über das Kugelgelenk 20 für den Zylinderkörper die schon erwähnte Möglichkeit, sich samt dem oder den Stutzen und der zugehörigen Hydraulikleitung 24 zu verdrehen insbesondere unter dem Gewicht der Leitung 24 in Richtung der Spurstange 16, die zwecks starrer Übertragung vom rechten auf das linke Vorderrad gemäß der Lenkung ständig hin und her bewegt wird. Im ungünstigsten Fall kann sich im Bereich der Hydraulikleitung 24 ein der Verstellung der Spurstange dienendes Halteelement oder dgl. 38 befinden, das mit der Hydraulikleitung 24 kollidiert. Durch die Verwendung der erfindungsgemäßen Halterung 30 wird nun ein Verdrehen des Zylinders 18 vermieden. Die im wesentlichen aus einem Federarm 30 bestehende Halterung wird im gezeigten Falle einschließlich Steckelement 26 benutzt, wo sich die Öse 31 der Halterung abstützt. Der erste von der Öse 31 sich nach unten erstreckende Bogen verschafft dem Federarm 30 eine gewisse Dilatation zur Aufnahme gewisser im Bereich einiger Millimeter bis max. ca. 1 cm liegender Relativbewegungen zur Halbachse 12. Der zweite Bogen ist zweckmäßigerweise dem Hydraulikzylinder angepaßt, der dritte Bogen umgreift den Ölstutzen 22, womit ein Verdrehen zuverlässig verhindert ist.

Sind zwei Stutzen vorhanden, empfiehlt sich die Anwendung der erfindungsgemäßen Halterung am endseitigen, also in Nähe des Kugelgelenkes bzw. der Achsmitte befindlichen Ölstutzens 22, da im Bereich des außen liegenden Stutzens in aller Regel größere Relativbewegungen zwischen Lenkzylinder 18 und Halbachse 12 auszugleichen wären.

Je nach Spurweite bzw. Verstellung der Halbachse 12 und deren Verschraubung kann es sich ergeben, daß das zum Stutzen 22 günstig gelegene Loch 14 durch einen Bolzen besetzt ist. In diesem Falle kann anstelle des Steckelements 26 die Öse 31 auf dem Schraubbolzen-Kopf abgestützt werden. Auf diese Weise läßt sich die Halterung 30 gemäß der Erfindung praktisch unabhängig von der Lage der Halbachse 12 für alle Spurweiten verwenden, mal mit, mal ohne Steckelement 26. Im übrigen ist die erfindungsgemäße Ausbildung des Federarms 30 nicht auf die Verwendung des Steckelementes 26 und einer dazu passenden Öse 31 beschränkt, vielmehr kommen für die lösbare Anbringung des Federarms 30 auch andere an der Halbachse 12 vorgesehene äquivalente Halterungsmöglichkeiten in Betracht.

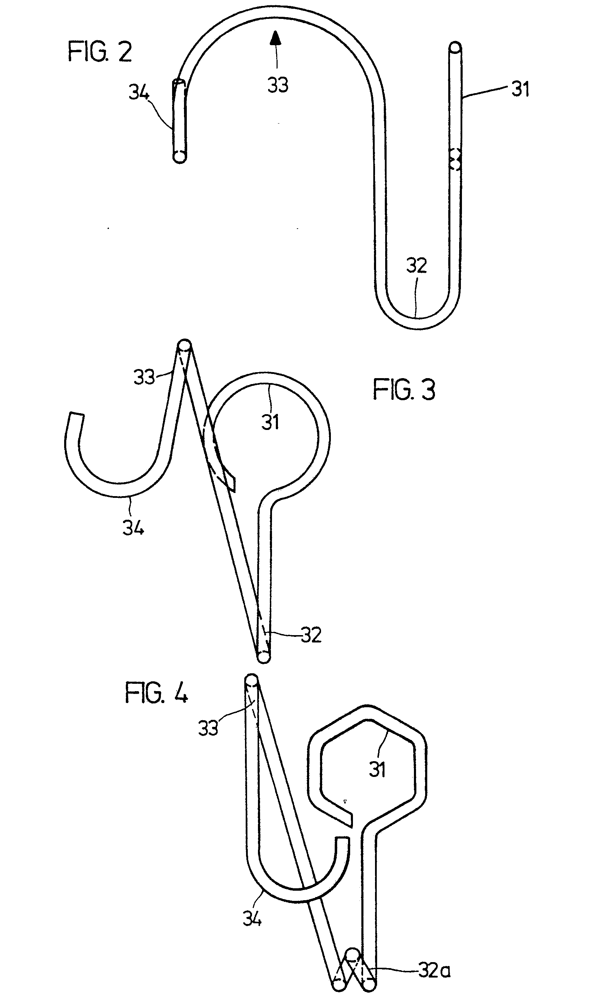

Fig. 2 zeigt die Draufsicht auf die Halterung bzw. den Federarm 30 in einer typischen Ausgestaltung für übliche Lenkzylinder. Dabei beträgt der Abstand von der Öse 31 vom Ansatz des zweiten Bogens 33 etwa 2 bis 4 cm, der Radius des zweiten Bogens 33 entspricht dem Außenradius eines herkömmlichen Lenkzylinders 18 mit z. B. etwa 30 mm.

Fig. 3 zeigt denselben Federarm 30 in einer um 90 Grad versetzten Draufsicht, etwa quer zur Achse gesehen. Hier sieht man die Öse 31, deren Innendurchmesser etwa so groß ist wie der Außendurchmesser des Kopfes 27 des Steckelementes 26 bzw. bei Wegfall des Steckelementes 26 auf den Schraubbolzen oder Mutternumfang abgestimmt ist, wobei zweckmäßigerweise der Durchmesser des Steckelement-Kopfes 27 und der Durchmesser der zu verwendenden Schraubbolzen bzw. Mutter gleich groß sein sollte, so daß die Öse 31 in jedem Falle paßt. Aus Fig. 3 wird der Abstand in axialer Richtung zwischen Mittelpunkt der Öse 31 und Mittelpunkt des dritten Bogens 34 deutlich, der abgestimmt sein muß auf den bei normaler Montage des Lenkzylinders 18 gegebenen Abstand von Bohrloch 14 zu Stutzen 22. Es empfiehlt sich, den dritten Bogen 34 über den Halbkreis hinaus — wie gezeigt — etwas zu verlängern, um ein sicheres Umgreifen des Stutzens 22 zu gewährleisten.

In Fig. 4 ist schließlich eine Variante des Federarms 30 gezeigt, wobei die Öse 31 die Form eines Sechsecks aufweist. Eine solche unrunde Form hat den zusätzlichen Vorteil, daß ein Verkippen des Federarms 30 nicht möglich ist. Im allgemeinen leistet jedoch auch die runde Form der Öse 31 zuverlässige Dienste. In Fig. 4 ist der erste Bogen zu Erhöhung der Elastizität bzw. zur Vergrößerung des Federweges als 360-Grad-Schleife 32a ausgebildet. Weiterhin ist bei dem Federarm 30 der Fig. 4 ein anderer axialer Abstand zwischen Öse 31 und drittem Bogen 34 gezeigt.

Im allgemeinen läßt sich die Halterung gemäß der Erfindung auf die meisten Hydraulik-Lenkzylinder 18 anwenden oder doch im Rahmen der Erfindung entsprechend anpassen, um bei den genannten Einbauverhältnissen zwischen spurverstellbarer Halbachse und Spurstange etwaige Beschädigungen insbesondere an den Hydraulikleitungen 24 zu verhindern.

**Patentansprüche**

1. Hydraulik-Lenkzylinder (18), der im Bereich einer spurverstellbaren Vorderachse einer Landmaschine, insbesondere eines Ackerschleppers, mittels Kugelgelenk (20) gelagert und etwa zwischen Halbachse (12) und der ebenfalls spurverstellbaren Spurstange (16) und etwa parallel zu diesen verlaufend auf den zum Achsende gehörigen Lankhebel wirkt und mindestens einen etwa radial angeordneten Hydrauliköl-Ein- bzw. Auslaßstutzen (22) aufweist, gekennzeichnet durch einen Federarm (30) als zusätzliche Halterung in wahlweiser Verbindung mit einem Steckelement (26) zum lösbaren Einstecken in eine freigebliebene Bohrung (14) der ansonsten für die Verschraubung der spurverstellbaren Halbachse(n) (12) vorgesehenen Lochreihe oder mit einem Verschraubungselement, wobei der Federarm (30) zum lösbaren Aufstecken auf den bolzenförmigen, der Einsteckseite abgewandten Kopf (27) des Steckelementes (26) oder auf den der Halbachsenverschraubung dienenden Kopf eines Schraubenbolzens bzw. einer Gegenmutter oder dergleichen eine dem genannten Kopf (27) bezüglich Form und lichtem Durchmesser angepaßte Öse (31) oder dergleichen aufweist, an die sich der eigentliche, im wesentlichen drahtwendelförmige, den Lenkzylinder (18) am Hydrauliköl-Ein- bzw. Auslaßstutzen (22) umgreifende Federarm (30) anschließt.

2. Hydraulik-Lenkzylinder nach Anspruch 1, gekennzeichnet durch einen sich nach unten an die Öse (31) anschließenden ersten U-förmigen Bogen (32) in der etwa senkrecht zur Richtung der Halbachse (12) bzw. des Lenkzylinders (18) stehenden Ebene, und daran anschließend einen in derselben Ebene liegenden, nach oben schwingenden teilkreisförmigen zweiten Bogen (33) mit einem etwa dem Lenkzylinder (18) entsprechenden Radius zum Umgreifen der Oberseite desselben bis zur Höhe seines Hydrauliköl-Ein- und Auslaßstutzens (22), woran sich nach Umlenkung in die etwa senkrecht zur gemeinsamen Ebene der beiden ersten Bögen (32, 33) ein dritter nach oben offener etwa halbkreisförmiger Bogen (34) anschließt zur Aufnahme der Unterseite des Ein- bzw. Auslaßstutzens (22).

3. Hydraulik-Lenkzylinder nach Anspruch 2, dadurch gekennzeichnet, daß der erste U-förmige Bogen (32) zur Verbesserung der quer zur Richtung der Achse erwünschten Elastizität bzw. Dilatation eine 360°-Schleife (32a) aufweist (Fig. 4).

4. Hydraulik-Lenkzylinder nach Anspruch 2 oder 3, dadurch gekennzeichnet, daß der Abstand des zweiten Bogens (33) von der Öse (31) etwa dem vorgesehenen maximalen sich im Lenkbetrieb einstellenden Abstand des Hydraulikzylinders (18) von der Halbachse (12) entspricht.

5. Hydraulik-Lenkzylinder nach einem der Ansprüche 2 bis 4, dadurch gekennzeichnet, daß der dritte Bogen (34) durch entsprechende Formgebung des ersten und/oder zweiten Bogens (32, 33) gegenüber der Öse (31) um das Maß versetzt ist, das dem axial gemessenen Abstand von der Mittelachse des zu haltenden Ölhydraulikstutzens (22) zur Mittelachse des der Befestigung der Öse (31) dienenden Kopfes oder dergleichen (27) entspricht.

6. Hydraulik-Lenkzylinder nach einem der vorangehenden Ansprüche, dadurch gekennzeichnet, daß die Öse (31) eine unrunde an einen entsprechenden Kopf oder dergleichen (27) angepaßte Form aufweist (Fig. 4).

7. Hydraulik-Lenkzylinder nach einem der vorangehenden Ansprüche, dadurch gekennzeichnet, daß der Federarm (30) aus handelsüblichem Federstahl in der Stärke von 3,5 bis 4,5 mm besteht.

**Claims**

1. A hydraulic steering cylinder (18) which is mounted in the region of an adjustable-track front axle of an agricultural machine, in particular a tractor, by means of ball joints (20) and which, extending substantially between the half axle (12) and the track rod (16) which is also adjustable in track, and substantially parallel thereto, acts on the steering arm which is associated with the end of the axle, and which has at least one substantially radially disposed hydraulic oil inlet or outlet connection (22), characterised by a spring arm (30) as an additional holder means in selective conjunction with a plug-in element (26) for releasable insertion into a bore (14) which has remained free, in the row of holes otherwise provided for screw connection of the adjustable-track half axle or axles (12), or with a screw element, wherein the spring arm (30), for being releasably fitted on to the pin-like head portion (27) of the element (26), which is remote from the insertion side thereof, or on to the head, which serves for screwing the half axle in position, of a screw bolt or a lock nut or the like, has an eye (31) or the like which is adapted to said head portion (27) in respect of shape and internal diameter and which is adjoined by the actual spring arm (30) which is substantially of a wire coil configuration and which engages around the steering cylinder (18) at the hydraulic inlet or outlet connection (22).

2. A hydraulic steering cylinder according to claim 1, characterised by a first U-shaped loop portion (32) which adjoins the eye (31) downwardly, in the plane which is substantially normal to the direction of the half axle (12) or the steering cylinder (18), and, adjoining said loop portion (32), a second upwardly curving, partcircular loop portion (33) which is disposed in the same plane, with a radius approximately corresponding to the steering cylinder (18), for engaging around the top thereof as far as the level of its hydraulic oil inlet and outlet connection (22), wherein adjoining same, after deflection into the plane substantially normal to the common plane of the first two loop portions (32, 33) is a third, upwardly open, substantially semicircular loop portion (34), for receiving the underside of the inlet or outlet connection (32).

3. A hydraulic steering cylinder according to claim 2, characterised in that the first U-shaped loop portion (32) has a 360° loop means (32a) for improving expansion or elasticity which is required transversely with respect to the direction of the axle (Fig. 4).

4. A hydraulic steering cylinder according to claim 2 or claim 3, characterised in that the spacing of the second loop portion (33) from the eye (31) approximately corresponds to the maximum intended spacing, which occurs in steering operation, of the hydraulic cylinder (18) from the half axle (12).

5. A hydraulic steering cylinder according to one of claims 2 to 4, characterised in that the third loop portion (34) is displaced with respect to the eye (31) by virtue of the first and/or second loop portions (32, 33) being of a suitable configuration, by a distance which corresponds to the spacing, as measured axially, of the centre line of the hydraulic oil connection (22) to be held, to the centre line of the head portion or the like (27) which serves for fixing the eye (21).

6. A hydraulic steering cylinder according to one of the preceding claims, characterised in that the eye (31) is of a non-round shape adapted to a corresponding head portion or the like (27) (Fig. 4).

7. A hydraulic steering cylinder according to one of the preceding claims, characterised in that the spring arm (30) comprises commercial spring steel of a thickness of from 3.5 to 4.5 mm.

**Revendications**

1. Cylindre hydraulique de direction assistée (18), monté au voisinage de l'essieu avant à voie réglable d'une machine agricole, en particulier d'un tracteur agricole, au moyen d'une articulation à rotule (20) et s'étendant sensiblement entre un demi-essieu (12) et la barre d'accouplement (16) également à voie réglable et en principe parallèlement à ceux-ci et agissant sur la biellette de direction correspondant à cette extrémité de l'essieu, ce cylindre comprenant au moins un embout d'entrée et de sortie d'huile (22) disposé en principe radialement, caractérisé par un bras formant ressort (30) à titre de support additionnel, associé éventuellement à un élément formant bouchon (26), pouvant être inséré amoviblement dans un perçage (14) demeuré libre de la rangée de trous prévue autrement pour le blocage par vissage du demi-essieu ou des demi-essieux à voie réglable (12) ou à un élément d'assemblage par vissage, le bras formant ressort (30) présentant, pour son engagement amovible sur la tête en forme de téton (27), opposée au côté d'insertion, de l'élément formant bouchon (26), ou sur la tête d'un boulon ou d'un contre-écrou ou analogue servant au blocage par vissage du demi-essieu ou des demi-essieux, un oeilleton (31) ou analogue adapté, en ce qui concerne sa forme et son diamètre intérieur, à la tête précitée (27), et auquel le bras de ressort proprement dit (30), ayant sensiblement une forme de spire et entourant le cylindre de direction (18) au niveau de l'embout d'entrée et de sortie de l'huile (22), vient se raccorder.

2. Cylindre hydraulique de direction assistée suivant la revendication 1, caractérisé en ce qu'il comprend un premier arc en forme d'U (32) se raccordant en direction du bas à l'oeilleton (31) dans un plan sensiblement perpendiculaire à la direction du semi-essieu (12) ou du cylindre de direction (18), et un second arc (33) se raccordant au précédent, disposé dans le même plan, formant une portion de cercle et orienté vers le haut, ce second arc ayant un rayon correspondant sensiblement à celui du cylindre de direction (18) pour entourer la partie supérieure de ce cylindre jusqu'à la hauteur de son embout d'entrée et de sortie de l'huile, un troisième arc (34) ouvert en direction du haut et ayant une forme sensiblement semi-circulaire se raccordant à l'arc précédent après déviation jusque dans un plan sensiblement perpendiculaire au plan commun des deux premiers arcs (32, 33), en vue de la réception de la face inférieure de l'embout d'entrée et de sortie d'huile (22).

3. Cylindre hydraulique de direction assistée suivant la revendication 2, caractérisé en ce que le premier arc en forme d'U (32) présente une boucle de 360° (32a) pour améliorer l'élasticité ou l'expansion désirée transversalement à la direction de l'essieu (Fig. 4).

4. Cylindre hydraulique de direction assistée suivant la revendication 2 ou 3, caractérisé en ce que l'écartement entre le second arc (33) et l'oeilleton (31) correspond sensiblement à l'écartement maximal prévu pouvant s'établir lors du travail de la direction entre le cylindre hydraulique (18) et le demi-essieu (12).

5. Cylindre hydraulique de direction assistée suivant l'une quelconque des revendications 2 à 4, caractérisé en ce que le troisième arc (34) est décalé par rapport à l'oeilleton (31), grâce à une conformation appropriée du premier et/ou du second arcs (32, 33), d'une distance qui correspond à l'écartement mesuré dans le sens axial entre l'axe médian de l'embout hydraulique à supporter (22) et l'axe médian de la tête ou analogue (27) servant à la fixation de l'oeilleton (31).

6. Cylindre hydraulique de direction assistée suivant l'une quelconque des revendications précédentes, caractérisé en ce que l'oeilleton (31) présente une forme non circulaire adaptée à une tête ou analogue (27) de forme correspondante (Fig. 4).

7. Cylindre hydraulique de direction assistée suivant l'une quelconque des revendications précédentes, caractérisé en ce que le bras formant ressort (30) est en acier pour ressorts du commerce ayant une épaisseur de 3,5 à 4,5 mm.

FIG. 1

FIG. 2

34

33

31

32

FIG. 3

33

31

34

32

FIG. 4

33

31

34

32a